# EUROPEAN PATENT APPLICATION

(11) **EP 0 601 774 A2**
(43) Date of publication of application: **15.06.1994**
(21) Application number: 93309573.9
(22) Date of filing: 01.12.1993
(51) Int. Cl.: B65D 88/12, B65D 85/84

(54) **Tank assembly for well stimulation fluids**

(30) Priority: 07.12.1992 US 986232
(71) Applicant: HALLIBURTON COMPANY, Duncan Oklahoma 73536 (US)
(72) Inventor: Davis, Gail F., Duncan, Oklahoma 73533 (US)
(74) Representative: Wain, Christopher Paul

(57) **Abstract**

A tank assembly for storing and transporting well stimulation fluids, comprises a frame (12); a cylindrical non-metallic tank (4) having a first end (8) and a flat second end (6), the tank being horizontally secured to the frame ; a fluid manifold (84) connected to the first end (8) of the tank (4) ; a plurality of hose connections extending from the manifold ; and a circulation system (98) for circulating fluid in the tank (4).

## Description

The present invention relates to a tank assembly especially but not exclusively for storing and transporting well stimulation fluids.

A need presently exists for highly corrosion-resistant tanks which (1) can be used for transporting and storing well fracturing fluids, well acidizing fluids, and other well stimulation fluids, and (2) can be used directly in well stimulation operations for delivering these stimulation fluids to the well bore.

Attempts have been made to provide such tanks by installing corrosion-resistant plastic liners in existing skid-mounted or mobile metal frac tanks; however, this approach has generally not been successful. A lined metal frac tank will typically have numerous exposed external metal parts and surfaces which are susceptible to corrosive chemical attack. Additionally, even under normal operating conditions, a corrosion-resistant liner can become detached or otherwise separated from the interior wait of the metal tank. Thus, lined frac tanks must be carefully watched and frequently repaired. Additionally, due to the need to avoid potentially damaging wear and tear on the tank liner, great care must be taken when cleaning lined frac tanks. Moreover, lined frac tanks typically cannot be cleaned as frequently and thoroughly as generally desired. Consequently, relatively high contaminant buildup levels are common in lined frac tanks.

It has also been proposed than an unlined corrosion-resistant frac tank be constructed from stainless steel. However, this approach would be quite costly. Further, stainless steel is not compatible with many well stimulation fluids.

We have now devised an improved tank assembly which is especially, but not exclusively, useful for stimulation fluids and which overcomes or mitigates some of the disadvantages of prior proposals.

According to the present invention, there is provided a tank assembly which comprises a frame; a first cylindrical, non-metallic tank having a first end, a cylindrical wall and a flat second end, said first tank being substantially horizontally secured to said frame; a fluid manifold connected to said first end of said first tank, said fluid manifold being operable for withdrawing fluid from said first tank when said tank is substantially horizontally secured to said frame; a conduit connecting means extending from said manifold for connecting at least one conduit to said manifold; and a circulation means for circulating fluid in said first tank when said first tank is substantially horizontally secured to said frame.

The present invention also provides a method of forming a portable tank assembly. The method utilizes a normally vertical, cylindrical, non-metallic tank having a top end and a flat bottom end, and comprises the steps of: (a) connecting a fluid manifold to the top end of the tank, said fluid manifold having a conduit connecting means extending therefrom for connecting at least one conduit to the fluid manifold; (b) providing the tank with a fluid circulation means for circulating fluid in the tank; and (c) securing the tank in horizontal position to a frame.

The present invention further provides a method of forming a portable tank assembly using a first normally vertical, cylindrical, non-metallic tank and a second normally vertical, cylindrical, non-metallic tank wherein each of the tanks has a top end and a flat bottom end. This inventive method comprises the steps of: (a) connecting a fluid manifold to the top end of the first tank, said fluid manifold having a conduit connecting means extending therefrom for connecting at least one conduit to the fluid manifold; (b) providing the second tank with a conduit means for removing fluid from the second tank when the second tank is placed in horizontal position; (c) providing the tanks with a circulating means for circulating fluid in the tanks; and (d) securing the tanks in horizontal position to a frame such that the flat bottom end of the first tank is positioned adjacent the flat bottom end of the second tank.

The tank assembly of the present invention can be made highly corrosion-resistant, and can be relatively inexpensive to build and easy to clean. Preferably, it will be compatible with most well stimulation fluids. In addition to being useful in well stimulation operations, the tank assembly can also be used for other purposes including, for example, industrial cleaning, chemical mixing, waste storage, and waste transport. Further, the tank assembly can require less maintenance than lined metal frac tanks and will provide cleaner stimulation fluids.

In order that the invention may be more fully understood, reference is made to the accompanying drawings, wherein:
Figures 1 (ie. 1A and 1B) is an elevational side view of one illustrative embodiment of a tank assembly of the invention;
Figure 2 is an elevational front view of the assembly of Fig. 1;
Figure 3 is an elevational back view of the tank assembly of Fig. 1;
Figure 4 is a partially cutaway elevational side view of an example of a manway hatch assembly for use in the assembly of Fig. 1;
Figure 5 is a cutaway elevational side view of an embodiment of threaded flange assembly 64 used in the tank assembly of Fig. 1;
Figure 6 (ie. 6A and 6B) is an elevational side view of a second illustrative embodiment of tank assembly of the invention;
Figure 7 is an elevational front view of the assembly of Fig. 6;
Figure 8 is an elevational back view of the tank assembly of Fig. 6;
Figure 9 is a partially cutaway side view of a flange assembly 240 used in the assembly of Fig. 6;
Figure 10 is a partially cutaway side view of a manway assembly 262 used in the tank assembly of Fig. 6; and
Figure 11 is a partially cutaway side view of a flange assembly 312 used in the tank assembly of Fig.6.

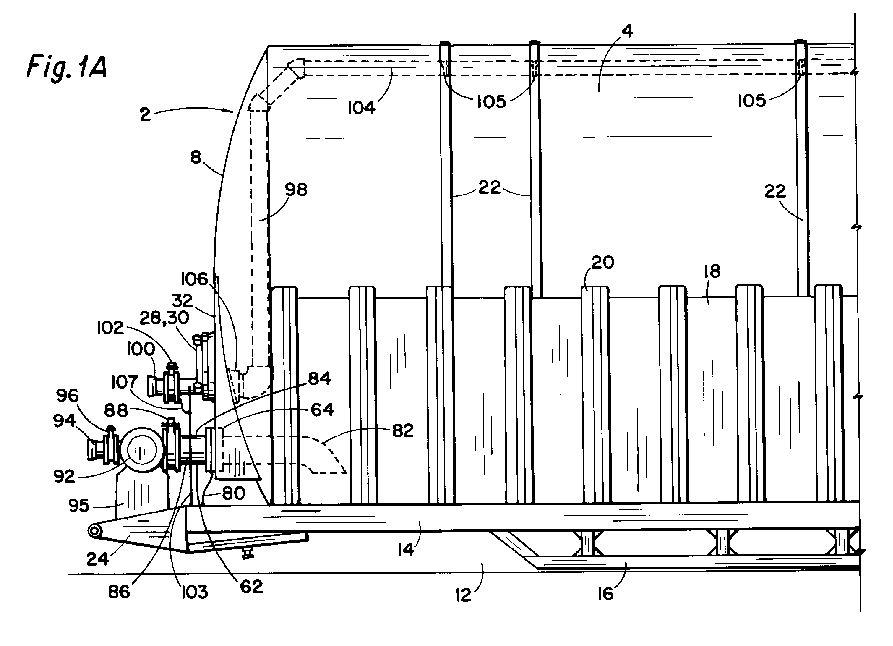

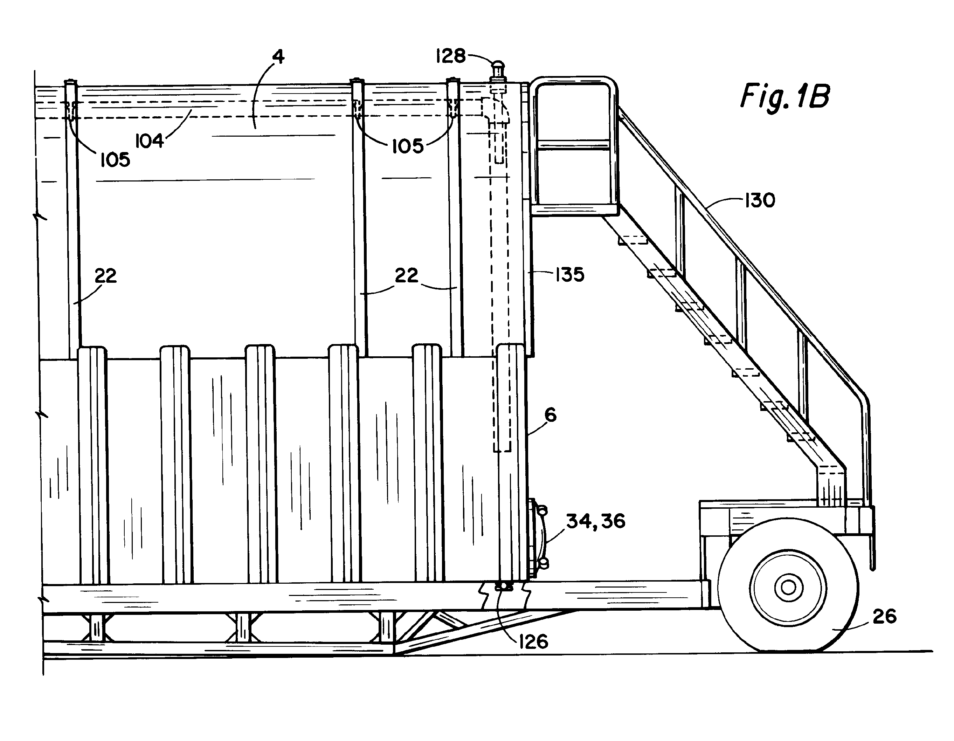

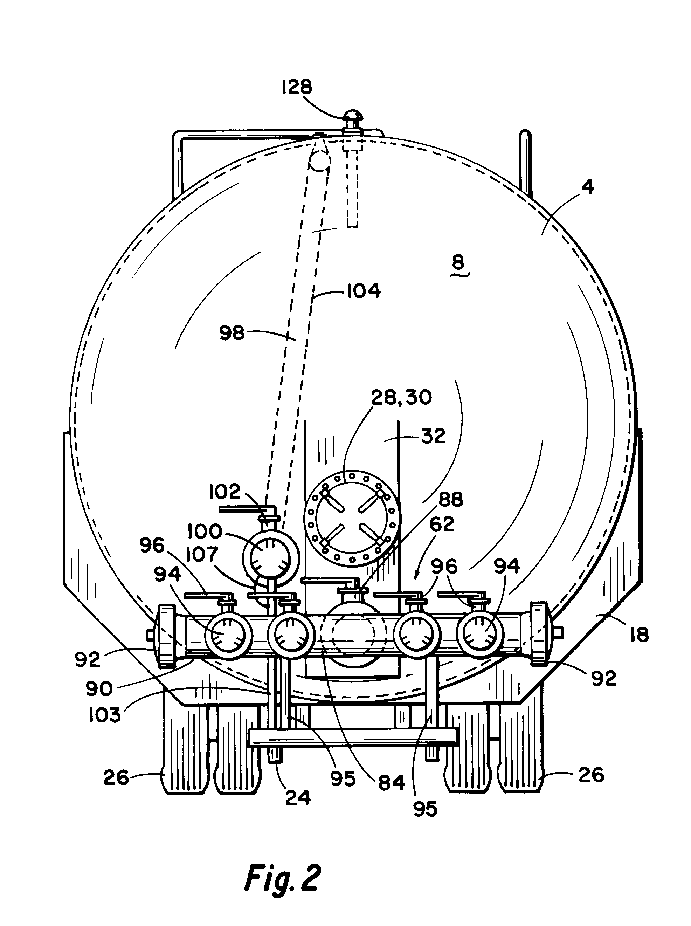

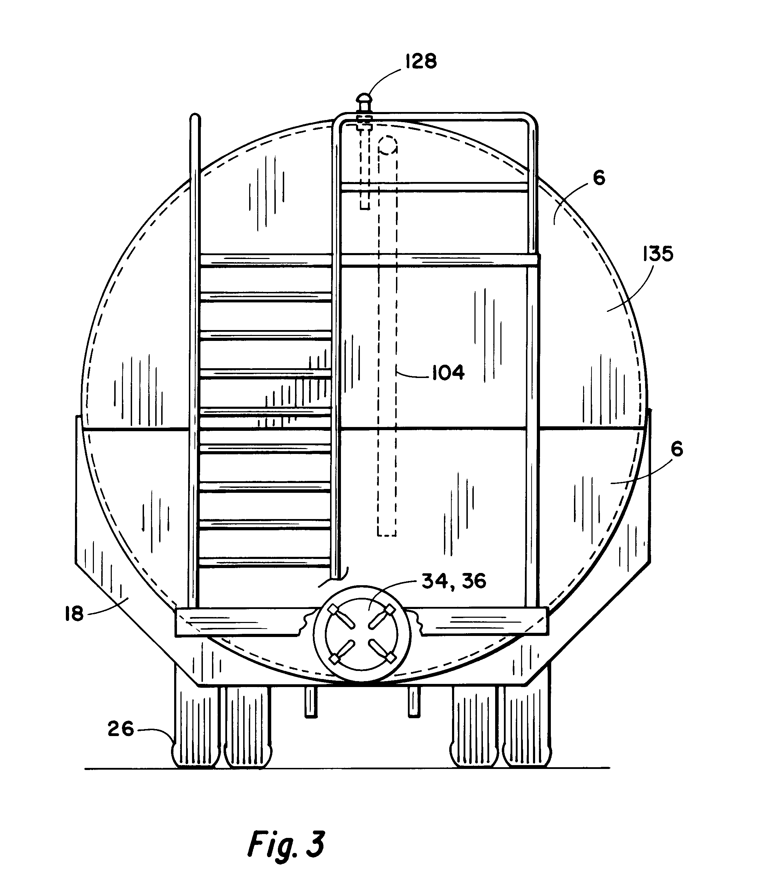

One embodiment of the tank assembly depicted in Figures 1-6. Assembly 2 is formed using a normally-vertical cylindrical storage tank 4. Tank 4 has a flat bottom end 6 and a generally elliptical top end 8. Storage tank4 is composed of a highly corrosion-resistant non-metallic material. Storage tank 4 is preferably composed of high density, cross-linked polyethylene. Most preferably, storage tank 4 is a rotomolded, high density, cross-linked polyethylene tank having a wall thickness of about 3/4 inch (19mm). High density, cross-linked polyethylene is compatible with generally all commonly used well stimulation fluids. Tank 4 will typically have a diameter of from about 8 to about 12 feet (2.44 to 3.66m) and a capacity of from about 250 to about 500 barrels (39.7 to 79.4m³). Such tanks are commercially available, for example, from PolyProcessing Company of Monroe, Louisiana.

Storage tank 4 is laid horizontally upon and secured to a frame assembly 12. Frame assembly 12 includes: a base frame 14; a support structure 16 mounted on the bottom of base frame 14; and a cradle 18 secured to the top side of base frame 14. Cradle 18 is sized for receiving tank4 as shown in Figures 1-3 and for holding tank 4 in horizontal position on frame assembly 12. Cradle 18 is preferably manufactured from steel and also preferably has reinforcing ribs 20 formed therein. Reinforcing ribs 20 have a greater thickness than the remainder of cradle 18. Reinforcing ribs 20 operate to increase the strength of cradle 18 and thereby reduce the total amount of material required for constructing cradle 18.

Frame assembly 12 also includes straps 22 which operate to hold tank 4 securely in cradle 18. Straps 22 extend over tank 4. The ends of straps 22 are bolted or otherwise secured to cradle 18. Straps 22 are preferably formed from steel or fiberglass.

Frame assembly 12 further comprises: (a) a hitch assembly 24 provided at one end of base frame 14 for connecting frame assembly 12 to a truck or other hauling vehicle and (b) at least two, preferably at least four, wheels 26 rotatably mounted at the other end of base frame 14. As will be apparent to those skilled in the art, support structure 16 mounted on the bottom of frame 14 is constructed such that, when hitch assembly 24 is disconnected from the truck or other hauling means and the front end of assembly 2 is lowered to the ground, assembly 2 will come to rest on support structure 16 with tank 4 sloping downward from flat end 6 to elliptical end 8.

A manway 28 and manway hatch assembly 30 are provided in a protruding extension 32 of tank end 8. A second manway 34 and manway hatch assembly 36 are provided near the bottom of flat end 6 of tank 4. Manways 28 and 34 provide access to the interior of tank 4 and facilitate the cleanout of tank 4.

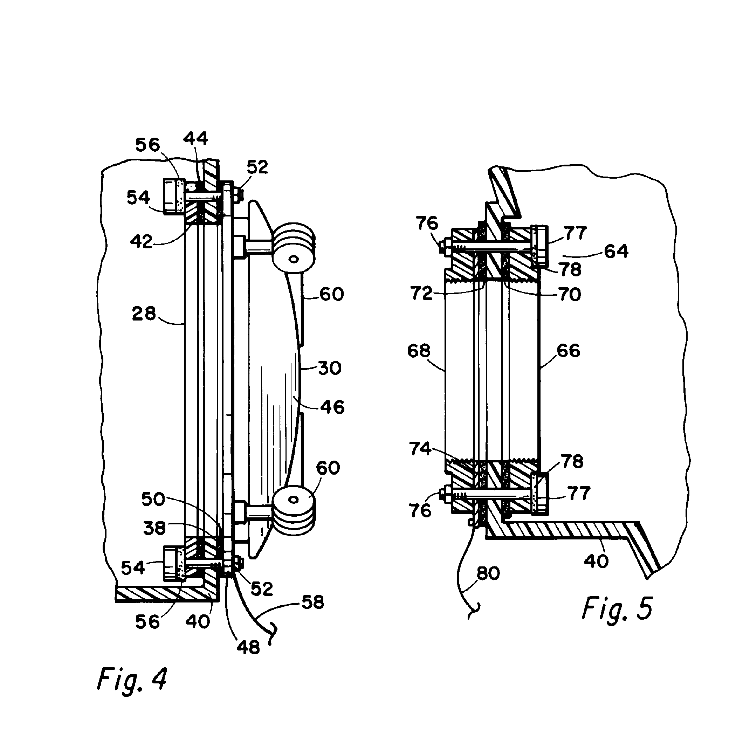

A partially cutaway side view of manway 28 and manway hatch assembly 30 is provided in Figure 4. Manway 28 comprises a port 38 extending through the end wall 40 of tank 4. Manway hatch assembly 30 is operable for closing port 38. Manway hatch assembly 30 preferably comprises: a flange support42 positioned inside tank 4; a gasket 44 positioned between flange support42 and end wall 40; a plastic lined metallic hatch lid 46 positioned outside of tank 4 and having a flange 48; and a gasket 50 positioned between flange 48 and end wall 40. Gaskets 44 and 50 are preferably composed of either a closed cell polyethylene foam, a highly corrosion-resistant rubber material such as VITON or NEOPRENE, or some other highly corrosion-resistant gasket material. Interior flange support 42 is preferably formed from a corrosion-resistant non-metallic material such as PVC or ultra- high molecular weight polyethylene.

Manway hatch assembly 30 is held in place on manway 28 using bolts 52 which extend through flange support 42, gasket 44, end wall 40, gasket 50, and flange 48. Bolts 52 are preferably stainless steel bolts having polyethylene encapsulated heads 54. The polyethylene encapsulating material surrounding the heads 54 of bolts 52 protects the bolt heads from corrosion. Encapsulated heads 54 are preferably positioned inside tank 4 with gaskets 56 positioned between heads 54 and interior flange support 42. Gaskets 56 are preferably composed of either closed cell polyethylene foam, VITON, NEOPRENE, or some other highly corrosion-resistant gasket material.

An electrically-conductive static dissipation line 58 is preferably connected between flange 48 and base frame 14. Static dissipation line 58 operates to prevent the buildup of static charge inside tank 4.

Metallic hatch lid 46 of hatch assembly 30 is lined with a corrosion-resistant plastic material. A plurality of cam locking arms 60 fold over hatch lid 46 in order to lock the hatch lid in its closed position. An example of a commercially available hatch lid assembly suitable for use in the present invention is the Model 1890 assembly manufactured by Clay & Bailey.

Manway 34 and manway hatch assembly 36 provided in flat end 6 of tank 4 are essentially identical to manway 28 and manway hatch assembly 30.

If desired, manway hatch assemblies 30 and/or 36 can be replaced with non-metallic hatch assemblies of the type disclosed in U.S. Patent Application Serial No. 07/932,388 filed August 19, 1992 to which reference should be made for further details.

As indicated in Figure 1, a fluid feed and drawdown system 62 is also provided in end 8 of tank 4. Fluid feed and drawdown system 62 is preferably installed in extension 32 of tank end 8 using a threaded flange assembly 64 of the type depicted in Figure 5. Threaded flange assembly 64 comprises: a first threaded flange 66 positioned on the interior of end wall 40 of tank 4; a second threaded flange 68 positioned on the exterior of end wall 40; a gasket 70 positioned between interior threaded flange 66 and end wall 40; a gasket 72 positioned between exterior threaded flange 68 and end wall 40; a metallic flange 74 positioned between exterior threaded flange 68 and gasket 72; and stainless steel bolts 76 having polyethylene encapsulated heads 77, said heads being positioned inside tank 4. Bolts 76 extend through interior threaded flange 66, gasket 70, end wall 40, gasket 72, metallic flange 74, and exterior threaded flange 68. Gaskets 78 are preferably positioned between encapsulated heads 77 of bolts 76 and interior threaded flange 66.

Threaded flanges 66 and 68 are preferably formed from a highly corrosion-resistant plastic material such as PVC or ultra-high molecular weight polyethylene. As with gaskets 44,50, and 56, gaskets 70, 72, and 78 are preferably composed of closed cell polyethylene foam, VITON, NEOPRENE, or some other highly corrosion-resistant gasket material. Metallic flange 74 is preferably formed from a highly corrosion-resistant, electrically-conductive metal such as Hastaloy C or Carpenter 20. An electrically-conductive static dissipation line 80 is preferably connected between base frame 14 and metallic flange 74. Metallic flange 74 and static dissipation line 80 operate to prevent the buildup of static charge in tank 4.

Fluid feed and drawdown system 62 includes a non-metallic suction ell 82 which is positioned inside tank 4. One end of suction ell 82 is threadedly connected to interior threaded flange 66 of flange assembly 64. The other end of suction ell 82 is turned toward the horizontal bottom of tank 4. Suction ell 82 is preferably formed from PVC, ultra-high molecular weight polyethylene, or some other highly corrosion-resistant non-metallic material. Suction ell 82 operates to reduce whirlpooling within tank 4 and to allow better drawdown of fluids from tank 4.

Fluid feed and drawdown system 62 also includes a fluid manifold 84. Fluid manifold 84 is preferably lined with a vinyl ester spray-on lining or some other highly corrosion-resistant plastic material. Fluid manifold 84 comprises: a conduit 86 which is threadedly connected to exterior threaded flange 68 of flange assembly 64; a butterfly valve 88 disposed in conduit 86; a lateral header 90 connected to conduit 86; pipe or hose connections 92 provided on each end of lateral header 90; pipe or hose connections 94 extending from header 90; and butterfly valves 96 disposed in hose connections 94. Pipe or hose connections 92 are provided primarily for linking tank 4 with other tanks positioned adjacent to tank 4. Steel supports 95 connected between lateral header 90 and frame assembly 12 are preferably provided to ensure that the outer portion offluid feed and drawdown system 62 is supported primarily by frame assembly 12 rather than by end wall 40 of tank 4.

Tank assembly 2 further includes a fluid circulation system 98. Fluid circulation system 98 comprises: a hose connection 100 positioned outside of end 8 of tank 4; a butterfly valve 102 disposed in hose connection 100; and a circulation conduit 104 positioned inside tank 4. Hose connection 100 and valve 102 are preferably supported on frame assembly 12 by steel support 103. Circulation conduit 104 begins at end 8 of tank4 and extends along the horizontal top of tank 4 toward end 6 of tank 4 and then down end 6 of tank 4 toward the horizontal bottom of tank 4. Circulation conduit 104 is preferably secured to the wall of tank 4 and to straps 22 using typical fiberglass reinforced plastic or polystrap hangers 105. In order to prevent the buildup of static charge in fluid circulation system 98, circulation conduit 104 is preferably composed of a conductive non-metallic material such as a graphite filament reinforced- or carbon filament reinforced-plastic or a highly corrosion-resistant metallic material such as Hastaloy C or Carpenter 20. Additionally, a static dissipation line 107 is preferably connected between hose connection 100 and steel support 103.

Hose connection 100 of fluid circulation system 98 communicates with circulation conduit 104 via a threaded assembly 106 which extends through the elliptical wall 108 of end 8 oftank4. Threaded assembly 106 is essentially identical to threaded flange assembly 64 depicted in Figure 5 except that the interior threaded flange and the exterior threaded flange of assembly 106 are shaped to match the contour of wall 108.

In addition to the above, inventive tank assembly 2 includes: a tank drain and drain valve 126 installed in the horizontal bottom of tank 4; a small port 128 installed in the horizontal top of tank 4 near flat end 6 for measuring fluids; and stairs 130, a ladder, or similar means for providing access to port 128 and to the horizontal upper exterior of tank 4.

Preferably, inventive tank assembly 2 also includes a fiberglass grating, a metal plate, or a similar support 135 which extends upwardly from the rear end of cradle 18. When tank 4 is positioned in cradle 18, flatend 6 oftank4 rests against support 135. Support 135 prevents tank 4 from sliding out of cradle 18 and prevents end 6 of tank 4 from bulging when tank 4 is filled with hot fluid. Stairs 130 are connected between support 135 and frame 14 and serve to brace plate 135 against end 6 of tank 4. In order to ensure that support 135 is protected in the event of material spillage, support 135 is preferably a fiberglass grating.

If desired, tank 4 can be insulated by spraying with a foam insulation material. After application, the foam insulation material will preferably be covered by wrapping tank 4 with a stainless steel skin.

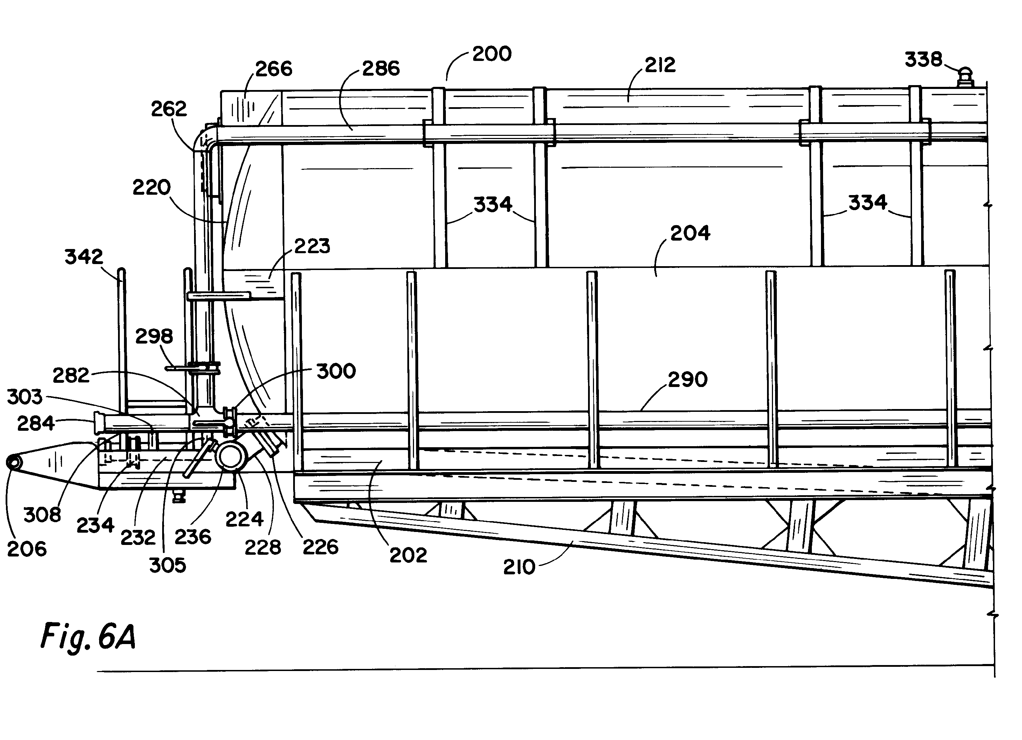

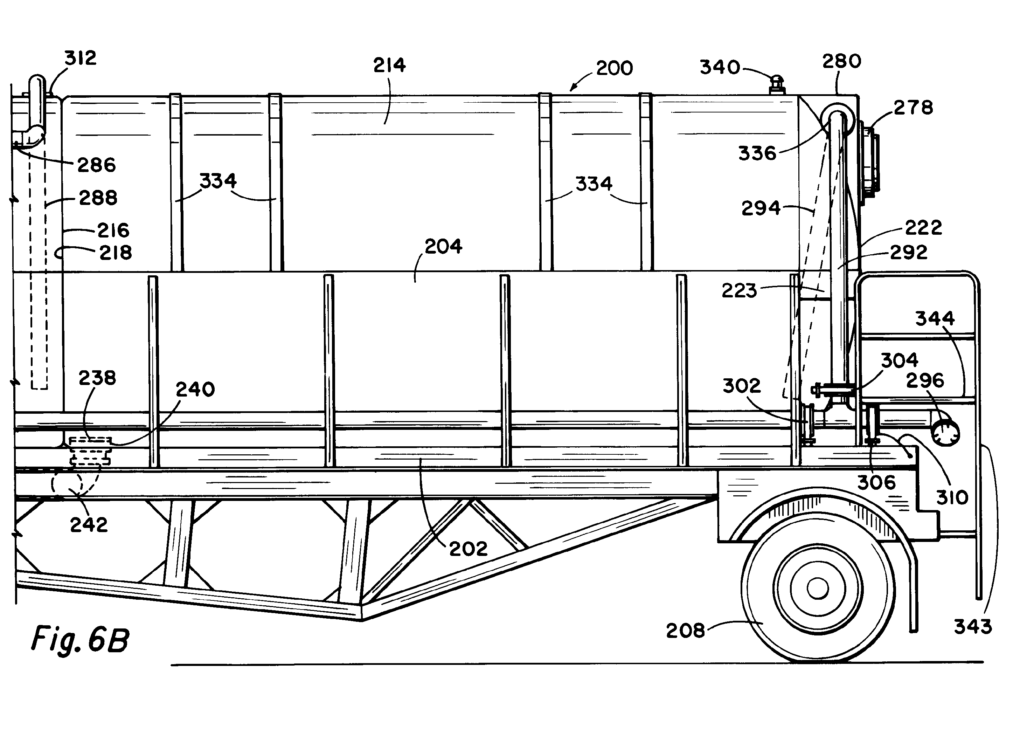

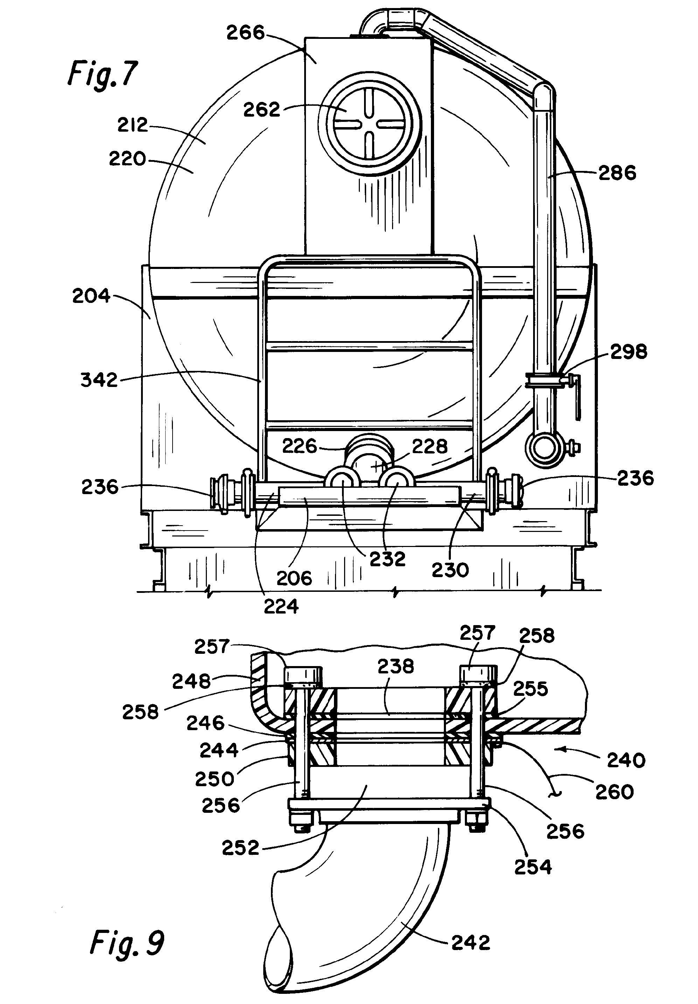

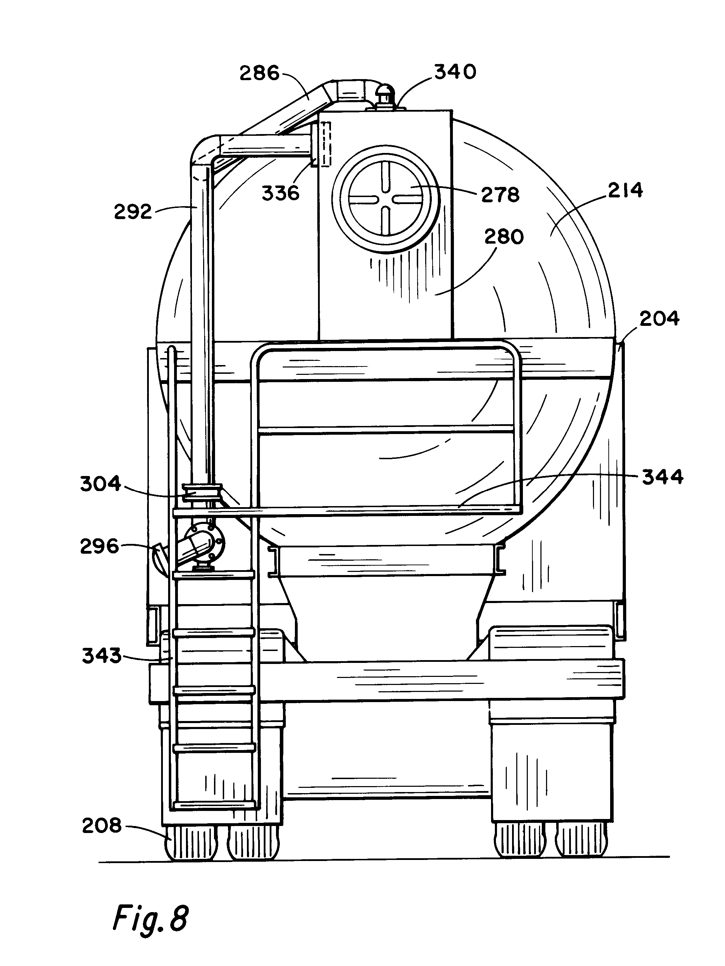

A second embodiment 200 of the tank assembly provided by the present invention is illustrated in Figures 6-11. As with embodiment 2, inventive tank assembly 200 comprises a base frame 202, a cradle 204 associated with base frame 202, a hitch assembly 206 mounted on the front end of base frame 202, and wheels 208 mounted on the back end of base frame 202. Base frame 202 has a support structure 210 mounted on the bottom thereof. As will be apparent to those skilled in the art, frame 202 and support structure 210 are constructed such that, when hitch assembly 206 is disconnected from a truck or other hauling means and the front end of assembly 200 is lowered to the ground, assembly 200 will come to rest on support structure 210 with wheels 208 raised above the ground and with assembly 200 sloping downward toward its front end.

Unlike inventive assembly 2, inventive tank assembly 200 is a two-compartment storage tank assembly which utilizes two normally vertical, cylindrical, non-metallic storage tanks 212 and 214. Each of tanks 212 and 214 has a flat bottom end and a generally elliptical top end. Tanks 212 and 214 are laid horizontally in cradle 204 such that the flat end 216 of tank 212 is adjacent the flat end 218 of tank 214. When thus positioned in cradle 204, the generally elliptical end 220 of tank 212 is positioned at the front end of base frame 202 and the generally elliptical end 222 of tank 214 is positioned at the back end of base frame 202. Fiberglass reinforced plastic or steel straps 223 are bolted or otherwise connected to cradle 204 and extend around elliptical ends 220 and 222 of tanks 212 and 214 for holding tanks 212 and 214 in cradle 204.

Each of tanks 212 and 214 is preferably a rotomolded, high density, cross-linked polyethylene tank having a wall thickness of about 3/4 inch (19mm). Each of tanks 212 and 214 will typically have a diameter of about 8ft. (2.44m) and a capacity of about 6300 US gal. (23.9_{M}³). These dimensions allow tank assembly 200 to be transported on the public highways in USA without obtaining special hauling permits. Rotomolded polyethylene tanks suitable for use in inventive assembly 200 are commercially available, for example, from PolyProcessing Company of Monroe, Louisiana.

A manifold system 224 for adding fluid to, and removing fluid from, tank 212 is installed at the bottom of end 220 of tank 212. Manifold system 224 comprises: a flange assembly 226 installed in the wall of end 220 oftank212; a conduit 228 connected to flange assembly 226; a lateral header 230 connected to the end of conduit 228; a plurality of pipe or hose connections 232 extending from lateral header 230; butterfly valves 234 disposed in connections 232; and conduit or hose connections 236 provided in the ends of lateral header 230. Manifold system 234 is preferably composed of teflon-lined steel or a highly corrosion-resistant non-metallic material.

An opening 238 is provided in the horizontal bottom of tank 214 for removing fluid therefrom. Associated with opening 238 are a flange assembly 240 and a fluid conduit 242. Conduit 242 extends from flange assembly 240 to manifold system 224. Conduit 242 is also preferably composed of either teflon-lined steel or a highly corrosion-resistant non-metallic material.

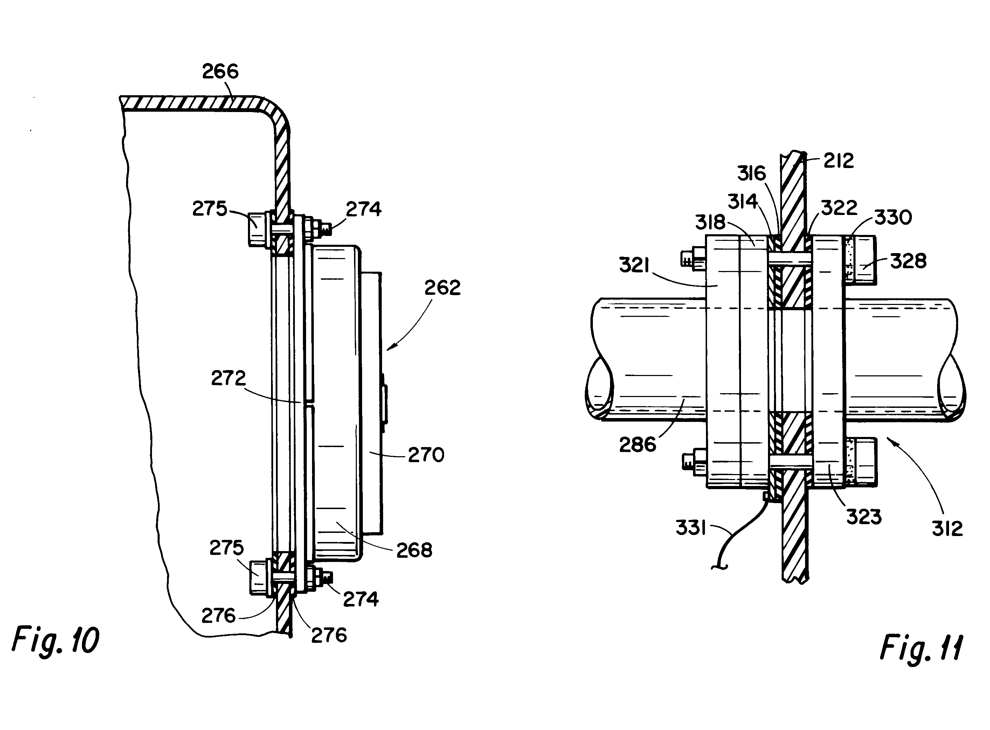

Flange assembly 240 is depicted in Figure 9. Flange assembly 240 preferably comprises: a thin metallic flange 244 positioned outside of tank 214; a gasket 246 positioned between metallic flange 244 and the exterior of wait 248 oftank214; a non-metallic flange support 250 positioned adjacent metallic flange 244; a butterfly valve 252 positioned adjacent non-metallic flange 250; a non-metallic support flange 253 positioned inside tank 214; and a gasket 255 positioned between support flange 253 and the interior of wall 248. Conduit 242 has a flange 254 on the end thereof which is positioned adjacent butterfly valve 252. Flange assembly 240 and conduit 242 are secured to wall 248 of tank 214 using stainless steel bolts 256 having polyethylene encapsulated heads 257. Gaskets 258 are positioned between heads 257 of bolts 256 and interior support flange 253.

Metallic flange 244 is preferably comprised of Hastaloy C, Carpenter 20, or some other highly corrosion-resistant, electrically-conductive metallic material. Gaskets 246, 255, and 258 are preferably composed of closed cell polyethylene foam, VITON, NEOPRENE, or some other highly corrosion-resistant gasket material. Non-metallic flanges 250 and 253 are preferably composed of PVC, ultra-high molecular weight polyethylene, or some other highly corrosion-resistant non-metallic material.

An electrically-conductive static dissipation line 260 is connected between base frame 202 and metallic flange 244 of flange assembly 240. Metallic flange 244 and static dissipation line 260 operate to prevent the buildup of static charge in tank 214.

Flange assembly 226 provided in end 220 of tank 212 is essentially identical to flange assembly 240.

A non-metallic manway assembly 262 is installed in a protruding extension 266 of end 220 of tank 212. The construction and operation of non-metallic manway assembly 262 are fully discussed in U.S. Patent Application Serial No. 07/932,388. As illustrated in Figure 10, non-metallic manway assembly 262 includes a non-metallic collar 268 and a non-metallic lid 270 which is threadedly received in collar 268. Collar 268 has a flange 272 which is operable for connecting collar 268 to tank 212 using stainless steel bolts 274 and gaskets 276. Stainless steel bolts 274 have polyethylene encapsulated heads 275. Collar 268 and lid 270 are composed of a highly corrosion-resistant material such as ultrahigh molecular weight polyethylene. Gaskets 276 are preferably composed of closed cell polyethylene foam, VITON, NEOPRENE, or some other highly corrosion resistant gasket material. A non-metallic manway assembly 278 is also preferably installed in a protruding extension 280 of end 222 of tank 214. Manway assembly 278 is essentially identical to manway assembly 262.

Alternatively, manway assembly 262 and/or manway assembly 278 can be identical to manway assembly 30 described hereinabove.

Inventive tank assembly 200 further includes a fluid feed and circulation system 282. Circulation system 282 comprises: a conduit or hose connection 284 located at the front end of assembly 200; a conduit 286 which extends from connection 284 to the horizontal top and to the back end 216 of tank 212; an interior conduit 288 positioned inside tank 212 which extends from conduit 286 toward the horizontal bottom of tank 212; a conduit 290 extending from connection 284 to back end 222 of tank 214; a conduit 292 extending from conduit 290 to the horizontal top portion oftank214; an interior conduit 294 positioned inside tank 214 and extending from the top end of conduit 292 toward the horizontal bottom of tank 214; and a second conduit or hose connection 296 positioned at the back end of tank assembly 200 and connected to conduits 290 and 292. A butterfly valve 298 is disposed in conduit 286 near the front end of tank assembly 200. A butterfly valve 300 is disposed in conduit 290 near the front end of tank assembly 200. A butterfly valve 302 is disposed in conduit 290 near the back end of tank assembly 200. Further, a butterfly valve 304 is installed in conduit 292 and a butterfly valve 306 is disposed between conduit/hose connection 296 and conduits 290 and 292. Steel brackets 303 and 305 are provided for supporting the front end of circulation system 282 on frame 202.

In order to prevent the buildup of static charge in circulation system 282, an electrically-conductive static discharge line 308 is connected between conduit/hose connection 284 and base frame 202 and a static discharge line 310 is connected between butterfly valve 306 and base frame 202. Conduits 286, 290, and 292 are preferably composed of teflon-lined steel. Conduits 288 and 294 are preferably composed of graphite filament reinforced- or carbon filament reinforced-plastic.

Conduit 286 of circulation system 282 communicates with interior conduit 288 via the flange assembly 312 depicted in Figure 11. Flange assembly 312 comprises: a metallic flange 314 positioned outside of tank 212; a gasket 316 positioned between metallic flange 314 and the exterior wall of tank 212; and a non-metallic flange 318 positioned adjacent metallic flange 314. Flange 321 provided on the end of conduit 286 is positioned adjacent non-metallic flange 318. Flange 323 provided on the upper end of conduit 288 is positioned adjacent the interior wall of tank 214. A gasket 322 is positioned between flange 323 and the wall of tank 214. Conduits 286 and 288 are secured to the wall of tank 212 using polyethylene encapsulated bolts 328 and gaskets 330. Gaskets 316, 322, and 330 are preferably composed of closed cell polyethylene foam, VITON, NEOPRENE, or some other highly corrosion-resistant gasket material. Non-metallic flange 318 is preferably composed of PVC, ultra- high molecular weight polyethylene, or some other highly corrosion-resistant non-metallic material.

Metallic flange 314 is preferably composed of Hastaloy C, Carpenter 20, or a comparable electrically-conductive, highly corrosion-resistant metal. An electrically-conductive static dissipation line 331 is connected between metallic flange 314 of flange assembly 312 and base frame 202. Metallic flange 314 and static dissipation line 331 operate to prevent the buildup of static charge in tank 212.

Conduit 292 and interior conduit 294 of circulation system 282 are association via a flange assembly 336. Flange assembly 336 is essentially identical to flange assembly 312.

In addition to the above, inventive tank assembly 200 preferably includes: a vacuum/vent port 338 provided in the horizontal top oftank212; a vacuum/vent port 340 provided in the horizontal top of tank 214; a platform 342 provided at the front end of tank assembly 200 for providing access to tank 212; and a ladder 343 and platform assembly 344 or ot her arrangement at the back end of tank assembly 200 for providing access to tank 214.

## Claims

1. A tank assembly which comprises a frame (12); a first cylindrical, non-metallic tank (4) having a first end (8), a cylindrical wall and a flat second end (6), said first tank (4) being substantially horizontally secured to said frame (12); a fluid manifold (84) connected to said first end (8) of said first tank (4), said fluid manifold being operable for withdrawing fluid from said first tank (4) when said tank is substantially horizontally secured to said frame; a conduit connecting means extending from said manifold (84) for connecting at least one conduit to said manifold; and a circulation means (98) for circulating fluid in said first tank (4) when said first tank is substantially horizontally secured to said frame (12).

2. A tank assembly according to claim 1, further comprising a manway (34) disposed in said second end (6) of said first tank (4).

3. A tank assembly according to claim 1 or2, further comprising an upwardly extending support associated with said frame (12), said flat second end (8) of said first tank (4) abutting said support when said first tank (4) is horizontally secured to said frame (12).

4. A tank assembly according to claim 1, or 3, further comprising a plurality of wheels (26) operably associated with said frame (12) for transporting said tank assembly.

5. A tank assembly according to claim 1, 2, 3 or 4, wherein said tank assembly further comprises a support means (16), associated with the bottom of said frame, for supporting said tank assembly on the ground such that, when said support means is contacting the ground, said first tank (4) slopes downwardly from said second end (6) to said first end (8).

6. A tank assembly according to any of claims 1 to 5, wherein said circulation means (282) comprises a conduit (286) positioned inside said first tank (212) and extending from said first end of said first tank (212) to said second end (216) of said first tank.

7. A tank assembly according to claim 6, wherein said conduit (286) is comprised of an electrically conductive, non-metallic material.

8. A tank assembly according to any of claims 1 to 7, further comprising means for preventing static charge buildup in said tank assembly.

9. A tank assembly according to claim 1 which comprises in addition to said first tank (212), a second cylindrical, non-metallic tank (214) having a first end (218) and a flat second end; and wherein said second tank is substantially horizontally secured to said frame (202) such that said flat second end of said first tank (212) is positioned against said flat first end of said second tank (214); said tank assembly also including a conduit means (242) for removing fluid from said second tank (214) when said second tank is substantially horizontally secured to said frame (202); and said circulation means (282) further comprises means for circulating fluid in said second tank (214) when said second tank (214) is substantially horizontally secured to said frame (202).

10. A tank assembly according to claim 9, further comprising a first manway (262) disposed in said first end of said first tank (212) and a second manway (278) disposed in said first end of said second tank (214).
